# EUROPÄISCHE PATENTANMELDUNG

(11) **EP 0 651 255 A1**
(43) Veröffentlichungstag der Anmeldung: **03.05.1995**
(21) Anmeldenummer: 94116302.4
(22) Anmeldetag: 17.10.1994
(51) Int. Cl.: G01N 35/10

(54) **Automatische Pipettiervorrichtung mit Reinigungseinrichtung**

(30) Priorität: 28.10.1993 CH 3253/93
(71) Anmelder: F. HOFFMANN-LA ROCHE AG, CH-4002 Basel (CH)
(72) Erfinder: Lerch, Erich, CH-6004 Luzern (CH)
(74) Vertreter: Ventocilla, Abraham

(57) **Zusammenfassung**

Automatische Pipettiervorrichtung, bei der nur eine Pipettiernadel mit einer entsprechenden Dosier- bzw. Transporteinrichtung für die Pipettiernadel zur Verfügung steht, wobei die Pipettiernadel durch einen ersten Schlauch und eine erste T-Verbindung mit einer Dosierspritze verbunden ist.

Um eine schnelle und gründliche Reinigung des Innenraums der Pipettiernadel mit geringem Aufwand zu ermöglichen, ist die Pipettiervorrichtung dadurch gekennzeichnet, dass ein Arm der ersten T-Verbindung (13) mit einer Reinigungseinrichtung verbunden ist, die folgende Komponenten enthält:
a) eine Kolbenpumpe (24), die durch eine zweite T-Verbindung (23), einen zweiten Schlauch (22) und ein erstes Ventil (21) mit einem Arm der ersten T-Verbindung (13) verbunden ist,
b) ein Saugrohr (32), das in einer in einem Behälter (33) enthaltenen Reinigungsflüssigkeit eingetaucht ist und das durch ein zweites Ventil (31) mit einem Arm der zweiten T-Verbindung (23) verbunden ist, und
c) eine Steuereinrichtung (41) zur Steuerung des ersten Ventils (21), des zweiten Ventils (31) und der Kolbenpumpe (24).

## Beschreibung

Die Erfindung betrifft eine automatische Pipettiervorrichtung, bei der nur eine Pipettiernadel mit einer entsprechenden Dosier- bzw. Transporteinrichtung für die Pipettiernadel zur Verfügung steht, wobei die Pipettiernadel durch einen ersten Schlauch und eine erste T-Verbindung mit einer Dosierspritze verbunden ist.

Im Bereich der automatischen Analysengeräte, z.B. jene die zur Durchführung von klinisch chemischen Analysen verwendet werden, sind automatische Pipettiervorrichtungen der oben genannten Art bekannt, die in der Regel Bestandteil eines solchen Analysengerätes sind und zur Dosierung und Uebertragung von flüssigen Proben und Reagenzien zwischen verschiedenen Behälter dienen, z.B. von einem Reagenzbehälter bzw. von einem Probenbehälter zu einer Messküvette, wo ein Probe-Reagenz-Gemisch gebildet wird, das im Analysengerät untersucht wird. Bekannte Pipettiervorrichtungen dieser Art enthalten eine Transporteinrichtung, die die Pipettiernadel zu einer Vielzahl von Pipettierpositionen und zwischen den Pipettiervorgängen zu einer Reinigungsposition führt, wo die Pipettiernadel mit einer geeigneten Flüssigkeit gereinigt wird, damit jeder Pipettiervorgang mit einer sauberen Pipettiernadel durchgeführt werden kann, die frei von Resten eines vorherigen Pipettiervorgangs ist.

Bei grösseren Analysengeräten sind z.B. zwei unabhängige Pipettiervorrichtungen mit je einer entsprechenden Dosier- bzw. Transporteinrichtung für die Pipettiernadeln vorgesehen. Dies ermöglicht, abwechselnd die eine oder die andere Pipettiernadel zu benutzen, während die andere Pipettiernadel gereinigt wird. Da die Reinigung einer der Pipettiernadel und die Benutzung der anderen Pipettiernadel zur Durchführung eines Pipettiervorgangs gleichzeitig statt findet, wird die Dauer des Arbeitszyklusses der Pipettiervorrichtung durch das Intervall für die Reinigung der Pipettiernadel nicht verlängert, d.h. die Dauer des für die Reinigung der Pipettiernadel benötigten Intervalls hat keinen Einfluss auf die Dauer des Arbeitszyklusses der Pipettiervorrichtungen des Analysengerätes, und hat deshalb auch keinen Einfluss auf die Dauer des Arbeitszyklusses des Analysengerätes. Der Probendurchsatz, d.h. die Anzahl Proben die pro Zeiteinheit mit dem Analysengerät untersucht werden können, ist daher von der Dauer des für die Reinigung der Pipettiernadel benötigten Intervalls unabhängig.

Bei kleineren Analysengeräten, bei denen ein möglichst kleiner Geräteaufwand angestrebt wird, steht in der Regel nur eine Pipettiervorrichtung, d.h. nur eine Pipettiernadel mit ihrer Dosier- bzw. Transporteinrichtung zur Verfügung. Eine Folge dieser Vereinfachung des Analysengerätes ist, dass der für die Reinigung der Pipettiernadel benötigte Intervall im Arbeitszyklus des Analysengerätes integriert werden muss. Der Arbeitszyklus des Analysengerätes wird dadurch länger und der Probendurchsatz kleiner.

Der Erfindung liegt daher die Aufgabe zugrunde, eine Pipettiervorrichtung der eingangs angegebenen Art zur Verfügung zu stellen, die ein möglichst kurzes Intervall für die Reinigung der Pipettiernadel benötigt, die aber eine gründliche Reinigung der Pipettiernadel sicherstellt.

Erfindungsgemäss wird diese Aufgabe mit einer Pipettiervorrichtung der eingangs angegebenen Art gelöst, die dadurch gekennzeichnet ist, dass ein Arm der ersten T-Verbindung mit einer Reinigungseinrichtung verbunden ist, die folgende Komponenten enthält:
a) eine Kolbenpumpe, die durch eine zweite T-Verbindung, einen zweiten Schlauch und ein erstes Ventil mit einem Arm der ersten T-Verbindung verbunden ist,
b) ein Saugrohr, das in einer in einem Behälter enthaltenen Reinigungsflüssigkeit eingetaucht ist und das durch ein zweites Ventil mit einem Arm der zweiten T-Verbindung verbunden ist, und
c) eine Steuereinrichtung zur Steuerung des ersten Ventils und des zweiten Ventils und der Kolbenpumpe.

Eine bevorzugte Ausführungsform der erfindungsgemässen Pipettiervorrichtung ist dadurch gekennzeichnet, dass ein Arm der ersten T-Verbindung mit einer Reinigungseinrichtung verbunden ist, die folgende Komponenten enthält:
a) eine Kolbenpumpe, die durch eine zweite T-Verbindung, einen zweiten Schlauch und ein Ventil mit einem Arm der ersten T-Verbindung verbunden ist,
b) ein Saugrohr, das in einer in einem Behälter enthaltenen Reinigungsflüssigkeit eingetaucht ist und das durch ein Rückschlagventil mit einem Arm der zweiten T-Verbindung verbunden ist, und
c) eine Steuereinrichtung zur Steuerung des Ventils und der Kolbenpumpe.

Der wesentliche Vorteil der erfindungsgemässen Pipettiervorrichtung gegenüber den im Stand der Technik bekannten Pipettiervorrichtungen liegt darin, dass in relativ kurzer Zeit und mit geringem Materialaufwand eine gründliche Reinigung der Pipettiernadel erzielt wird.

Ausführungsbeispiele der Erfindung werden im folgenden anhand der beiliegenden Zeichnungen beschrieben. Es zeigen
- Fig. 1: eine schematische Darstellung einer erfindungsgemässen Pipettiervorrichtung.
- Fig. 2: eine bevorzugte Variante der Pipettiervorrichtung gemäss Fig. 1.

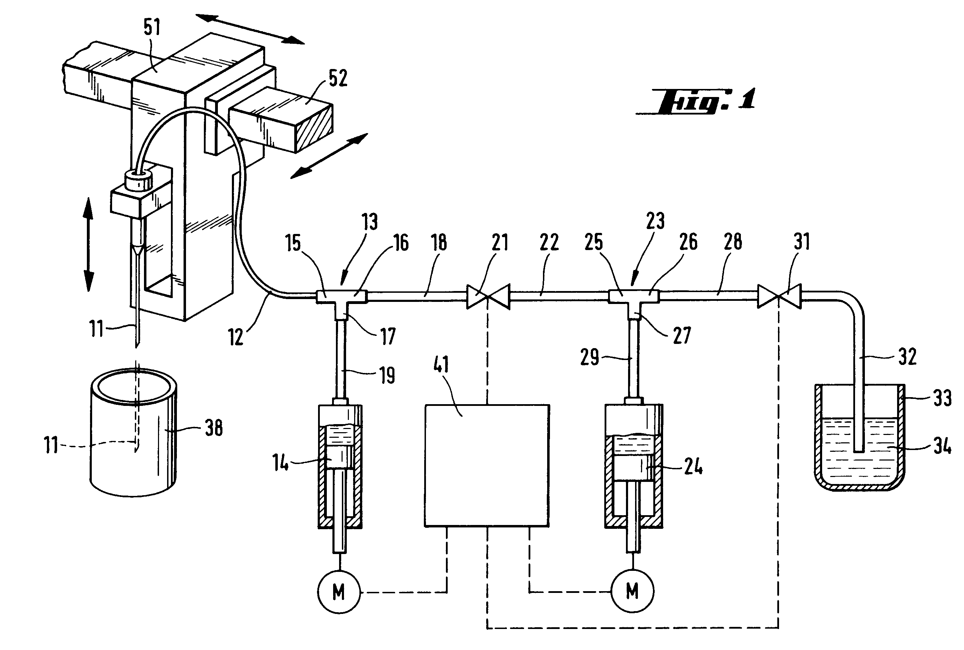

Wie in Fig. 1 gezeigt, enthält eine erfindungsgemässe Pipettiervorrichtung nur eine metallische Pipettiernadel 11, die durch einen ersten Schlauch 12, z.B. einen Teflonschlauch, und eine erste T-Verbindung 13 mit einer Dosierspritze 14 hoher Präzision verbunden ist, wobei der erste Schlauch 12 mit einem Arm 15 der T-Verbindung 13 und der Ausgang der Dosierspritze 14 durch einen Schlauch 19 mit einem Arm 17 der T-Verbindung 13 verbunden ist.

Die Dosierspritze 14 hat einen Zylinder aus Metall und einen Kolben aus Kunststoff mit Gummidichtung, dessen Spindel mittels eines Schrittmotors bewegt wird.

Im Betrieb enthalten die Dosierspritze 14 und ein daran angeschlossener Teil des Schlauches 12 ein Volumen Wasser als Medium zur Druckübertragung. Das mit der Pipettiernadel zu pipettierende Volumen einer Flüssigkeit, z.B. ein Reagenz aus einem Reagenzbehälter oder eine Probe aus einem Probebehälter, wird im Innenraum der Pipettiernadel 11 und wenn nötig zum Teil auch in einem anschliessenden Teil des Schlauches 12 aufgenommen. Die zu pipettierende Flüssigkeit wird durch eine Luftblase vom Wasser im Schlauch 12 getrennt.

Die erfindungsgemässe Pipettiervorrichtung enthält eine Transporteinrichtung für die Pipettiernadel. Diese Transporteinrichtung enthält eine Stange 52, die durch einen nicht gezeigten Antrieb in der durch einen Pfeil angedeuteten Richtung bewegbar ist, und einen Transportwagen 51 für die Pipettiernadel 11. Der Transportwagen 51 ist durch einen nicht gezeigten Antrieb in der durch einen Pfeil angedeuteten Richtung entlang der Stange 52 bewegbar. Der Transportwagen 51 enthält einen nicht gezeigten Antrieb, durch den die Pipettiernadel 11 in die durch einen Pfeil angedeuteten Richtung bewegbar ist. Die soeben beschriebene Transporteinrichtung ermöglicht, die Pipettiernadel in drei zueinander senkrechten Richtungen zu bewegen, und dadurch diese zu einer Anzahl von Pipettierpositionen und auch zu einer Reinigungsposition zu bringen.

In der Reinigungsposition wird Reinigungsflüssigkeit durch die Pipettiernadel 11 gepumpt. Die dabei aus der Pipettiernadel austretende Reinigungsflüssigkeit wird von einem Behälter 38 aufgenommen. Während des Reinigungsvorgangs hat die Pipettiernadel 11 die in Fig. 1 durch gestrichelte Linien angedeutete Position in Bezug auf den Behälter 38.

Ein Arm 16 der ersten T-Verbindung 13 ist mit einer Reinigungseinrichtung verbunden, die folgende Komponenten enthält:
a) eine Kolbenpumpe 24, die durch eine zweite T-Verbindung 23, einen zweiten Schlauch 22, ein erstes Ventil 21 und einen Schlauch 18 mit dem Arm 16 der ersten T-Verbindung 13 verbunden ist, wobei der zweite Schlauch 22 mit einem Arm 25 der T-Verbindung 23 und der Ausgang der Kolbenpumpe 24 durch einen Schlauch 29 mit einem Arm 27 der T-Verbindung 23 verbunden ist,
b) ein Saugrohr 32, das in eine in einem Behälter 33 enthaltenen Reinigungsflüssigkeit 34 eingetaucht ist und das über ein zweites Ventil 31 und einen Schlauch 28 mit einem Arm 26 der zweiten T-Verbindung 23 verbunden ist, und
c) eine Steuereinrichtung 41 zur Steuerung des ersten Ventils 21, des zweiten Ventils 31 und der Kolbenpumpe 24.

In einer bevorzugten Ausführungsform ist die Steuereinrichtung so eingerichtet, dass durch sie das erste Ventil 21, das zweite Ventil 31 und die Kolbenpumpe 24 so steuerbar sind, dass zur Durchführung eines Reinigungsvorgangs der Pipettiernadel 11 der folgende Ablauf statt findet:
Während eines ersten Intervalls, in dem das zweite Ventil 31 offen gehalten wird und das erste Ventil 21 geschlossen gehalten wird, wird mit der Kolbenpumpe 24 Reinigungsflüssigkeit vom Behälter 33 gesaugt. Das erste Intervall dauert ca. 7,8 Sekunden.

Während eines darauffolgenden zweiten Intervalls, in dem das zweite Ventil 31 und das erste Ventil 21 geschlossen gehalten werden, wird mit der Kolbenpumpe 24 der Druck in den Schläuchen 22, 28, 29 erhöht. Das zweite Intervall dauert ca. 0,2 Sekunden.

Während eines darauffolgenden dritten Intervalls, in dem der erste Ventil 21 offen gehalten wird und das zweite Ventil 31 geschlossen gehalten wird, wird mit der Kolbenpumpe 24 der Druck in den Schläuchen 22, 28, 29 annähernd konstant gehalten, wobei ein Teil der im zweiten Schlauch 22 enthaltenen Reinigungsflüssigkeit durch den ersten Schlauch 12 und die Pipettiernadel 11 nach aussen strömt. Das dritte Intervall dauert ca. 2 Sekunden.

Die Kolbenpumpe 24 hat einen Zylinder aus Metall und einen Kolben aus Kunststoff mit Gummidichtung, dessen Spindel mittels eines Schrittmotors bewegt wird.

Die Kolbenpumpe 24 dient dazu, während des oben genannten zweiten Intervalls in den Schläuchen 22, 28, 29 ein so hohen Druck zu bilden, dass im oben genannten dritten Intervall die Strömung der Reinigungsflüssigkeit durch die Pipettiernadel eine turbulente Strömung ist. Diese Strömungsart ermöglicht die gründliche Reinigung des Innenraums der Pipettiernadel in sehr kurzer Zeit.

Die Strömung der Reinigungsflüssigkeit durch den ersten Schlauch 12 sollte vorzugsweise auch turbulent sein, im Rahmen der Erfindung genügt es aber, dass sie eine definierte Strömung ist, die turbulent oder laminar sein kann.

Um diese Strömungsbedingungen zu erzielen, müssen alle beteiligten Komponenten geignete Abmessungen haben.

Die Abmessungen der Pipettiernadel 11 und des damit verbundenen Schlauchs 12 ergeben sich aus der erforderlichen Genauigkeit der zu pipettierenden Volumina im Volumenbereich der zu pipettierenden Flüssigkeiten. Dieser Bereich kann z.B. kleine Volumina, die z.B. für Proben zwischen 2 und 50 Mikroliter liegen, und grössere Volumina umfassen, die für Reagenzien bis ca. 200 Mikroliter betragen können. Für diesen Volumenbereich hat man ermittelt, dass die Pipettiernadel einen Innendurchmesser von ca. 0,4 mm und der Schlauch 12 einen Innendurchmesservon ca. 0,8 mm haben sollte, um die erforderliche Genauigkeit der pipettierten Volumina zu erreichen. Die Mindestlänge des Schlauchs 12 ist im wesentlichen durch das höchste Volumen bestimmt, das zu pipettieren ist. Im vorliegenden Ausführungsbeispiel hat die Pipettiernadel 11 einen Innendurchmesser von 0,4 mm und eine Länge von 115 mm; der Schlauch 12 hat einen Innendurchmesser von 0,8 mm und eine Länge von 500 mm.

Die übrigen Schläuche in Fig. 1 haben Innendurchmesser, die 1,6 und 3 Millimeter betragen.

Durch Versuche hat man ermittelt, dass bei den soeben erwähnten Abmessungen der Pipettiernadel 11 und der verschiedenen Schläuche eine Strömung von 2,5 Milliliter Reinigungsflüssigkeit innerhalb von 2 Sekunden durch die Pipettiernadel 11 erforderlich ist, um eine gute Reinigungswirkung des Innenraums der Pipettiernadel 11 und des Schlauchs 12 zu erzielen.

Beim Reinigungsvorgang verursacht der hydraulische Widerstand der Pipettiernadel 11 und des Schlauchs 12 praktisch den ganzen Druckverlust, der von den übrigen Komponenten verursachten Druckverlust ist praktisch vernachlässigbar.

Um beim Reinigungsvorgang die gewünschte turbulente Strömung in der Pipettiernadel 11 zu erzeugen, ist es unter den oben genannten Bedingungen erforderlich, in den oben erwähnten zweiten und dritten Intervall mittels der Kolbenpumpe 24 einen Druck von ca. 6 bar 22 in den Schläuchen 22, 28, 29 zu erzeugen. In einer bevorzugten Ausführungsform besteht jeder der Schläuche 22, 28, 29 aus einem starren, d.h. durch den Druck von 6 bar praktisch nicht deformablen Material, z.B. aus Polyäthylen. Durch die Wahl eines solchen Materials für die Schläuche 22, 28, 29 wird sichergestellt, dass der erforderliche Druck von ca. 6 bar und dadurch die gewünschte Wirkung der Reinigungseinrichtung über längere Zeit erhalten bleibt.

Vor Beginn jedes Reinigungsvorgangs werden sämtliche Schläuche in Fig.1 und auch die Pipettiernadel 11 entlüftet, indem sie mit Reinigungsflüssigkeit aus dem Behälter 33 gefüllt werden. Auch für diesen Entlüftungsvorgang werden die Ventile 21, 31 und die Kolbenpumpe 24 in geeigneter Weise von der Steuereinrichtung 41 gesteuert. Erst nach dem Entlüftungsvorgang folgen die drei oben genannte Intervalle des Reinigungsvorgangs.

Nach jedem Reinigungsvorgang werden in einem vierten Intervall das Ventil 21 geschlossen und das Ventil 31geöffnet, um den Druck im Schlauchsystem 22, 28, 29 zum Atmosphärendruck fallen zu lassen , bzw. frische Reinigungsflüssigkeit 34 anzusaugen. Auf diese Weise wird die Vorrichtung für den nächsten Reinigungszyklus vorbereitet.

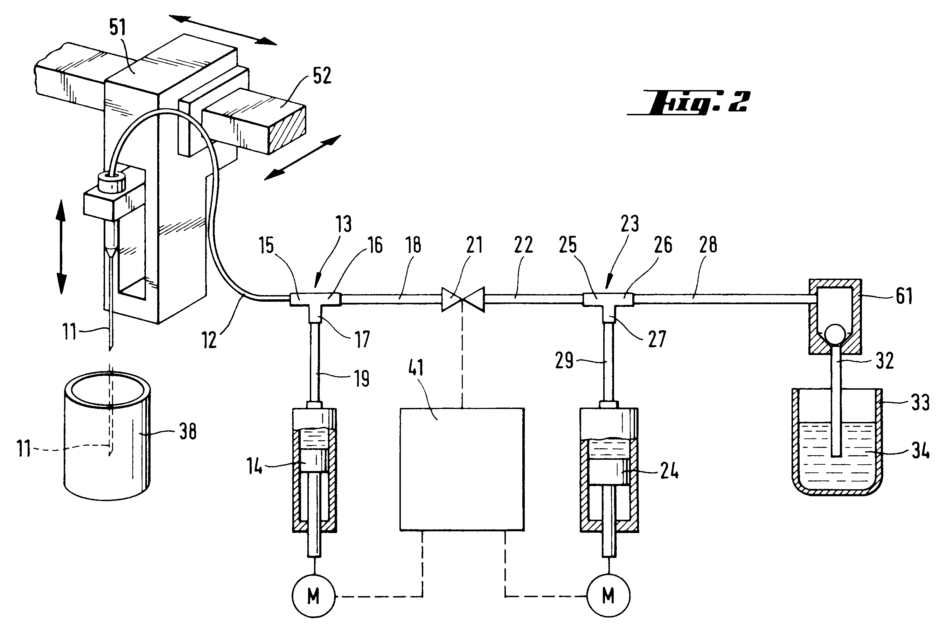

Fig. 2 zeigt eine bevorzugte Variante der Pipettiervorrichtung gemäss Fig. 1. In der Variante gemäss Fig. 2 wird ein Rückschlagventil 61 anstelle des Ventils 31 in Fig. 1 verwendet. Das Rückschlagventil 61 benötigt keine Steuerung durch die Steuereinrichtung 41. Wenn die Kolbenpumpe 24 einen Unterdruck in der Leitung 28 erzeugt, wird das Rückschlagventil 61 dadurch geöffnet bzw. offen gehalten. Wenn die Kolbenpumpe 24 einen Ueberdruck in der Leitung 28 erzeugt, wird das Rückschlagventil 61 dadurch geschlossen bzw. geschlossen gehalten.

In der Variante gemäss Fig. 2 ist die Steuereinrichtung 41 so eingerichtet, dass durch sie das Ventil 21 und die Kolbenpumpe 24 so steuerbar sind, dass zur Durchführung eines Reinigungsvorgangs der Pipettiernadel 11 der folgende Ablauf statt findet:
während eines ersten Intervalls, in dem das Ventil 21 geschlossen gehalten wird und mit der Kolbenpumpe 24 Reinigungsflüssigkeit vom Behälter 33 gesaugt wird, wird das Rückschlagventil 61 durch einen dadurch erzeugten Unterdruck offen gehalten,
während eines darauffolgenden zweiten Intervalls, in dem das Ventil 21 geschlossen gehalten wird und mit der Kolbenpumpe 24 der Druck in den Schläuchen 22, 28, 29 erhöht wird, wird das Rückschlagventil 61 durch den dadurch erzeugten Ueberdruck geschlossen gehalten,
während eines darauffolgenden dritten Intervalls, in dem das Ventil 21 offen gehalten wird und das Rückschlagventil 61 durch Ueberdruck geschlossen bleibt, wird mit der Kolbenpumpe 24 der Druck in den Schläuchen 22, 28, 29 annähernd konstant gehalten, wobei ein Teil der im zweiten Schlauch 22 enthaltenen Reinigungsflüssigkeit durch den ersten Schlauch 12 und die Pipettiernadel 11 nach aussen strömt.

Der Aufbau und die Funktionsweise der Ausführungsform gemäss Fig. 2 ist im übrigen gleich bzw. analog wie oben für die Ausführungsform gemäss Fig. 1 beschrieben.

In beiden oben beschriebenen Ausführungsformen steuert die Steuereinrichtung 41 in geeigneter Weise sowohl den Schrittmotor der Kolbenpumpe 24 wie auch den Schrittmotor der Dosierspritze 14. Für den oben beschriebenen Reinigungsvorgang ist die Steuerung der Kolbenpumpe 24 durch die Steuereinrichtung 41 von Bedeutung. Die Steuerung des Schrittmotors der Dosierspritze 14 durch die Steuereinrichtung 41 ist hingegen für den Dosiervorgang von Bedeutung, der zeitlich ausserhalb des Reinigungsvorgangs statt findet.

## Patentansprüche

1. Automatische Pipettiervorrichtung, bei der nur eine Pipettiernadel mit einer entsprechenden Dosier- bzw. Transporteinrichtung für die Pipettiernadel zur Verfügung steht, wobei die Pipettiernadel durch einen ersten Schlauch und eine erste T-Verbindung mit einer Dosierspritze verbunden ist,
dadurch gekennzeichnet, dass ein Arm der ersten T-Verbindung (13) mit einer Reinigungseinrichtung verbunden ist, die folgende Komponenten enthält:
a) eine Kolbenpumpe (24), die durch eine zweite T-Verbindung (23), einen zweiten Schlauch (22) und ein erstes Ventil (21) mit einem Arm der ersten T-Verbindung (13) verbunden ist,
b) ein Saugrohr (32), das in eine in einem Behälter (33) enthaltenen Reinigungsflüssigkeit eingetaucht ist und das durch ein zweites Ventil (31) mit einem Arm der zweiten T-Verbindung (23) verbunden ist, und
c) eine Steuereinrichtung (41) zur Steuerung des ersten Ventils (21), des zweiten Ventils (31) und der Kolbenpumpe (24).

2. Pipettiervorrichtung gemäss Anspruch 1, dadurch gekennzeichnet, dass die Steuereinrichtung (41) so eingerichtet ist, dass durch sie das erste Ventil (21), das zweite Ventil (31) und die Kolbenpumpe (24) so steuerbar sind, dass zur Durchführung eines Reinigungsvorgangs der Pipettiernadel (11) der folgende Ablauf statt findet:
während eines ersten Intervalls, in dem das zweite Ventil (31) offen gehalten wird und das erste Ventil (21) geschlossen gehalten wird, wird mit der Kolbenpumpe (24) Reinigungsflüssigkeit (34) vom Behälter (33) angesaugt ,
während eines darauffolgenden zweiten Intervalls, in dem das zweite Ventil (31) und das erste Ventil (21) geschlossen gehalten werden, wird mit der Kolbenpumpe (24) der Druck im zweiten Schlauch (22) erhöht, und
während eines darauffolgenden dritten Intervalls, in dem das erste Ventil (21) offen gehalten wird und das zweite Ventil (31) geschlossen gehalten wird, wird mit der Kolbenpumpe (24) der Druck im zweiten Schlauch (22) annähernd konstant gehalten, wobei einen Teil der im zweiten Schlauch (22) enthaltenen Reinigungsflüssigkeit durch den ersten Schlauch (12) und die Pipettiernadel (11) nach aussen strömt.

3. Pipettiervorrichtung gemäss Anspruch 1, dadurch gekennzeichnet, dass der zweite Schlauch (22) aus einem starren Material besteht.

4. Pipettiervorrichtung gemäss Anspruch 1, dadurch gekennzeichnet, dass der zweite Schlauch (22) aus Polyäthylen besteht.

5. Automatische Pipettiervorrichtung, bei der nur eine Pipettiernadel mit einer entsprechenden Dosier- bzw. Transporteinrichtung für die Pipettiernadel zur Verfügung steht, wobei die Pipettiernadel durch einen ersten Schlauch und eine erste T-Verbindung mit einer Dosierspritze verbunden ist,
dadurch gekennzeichnet, dass ein Arm der ersten T-Verbindung (13) mit einer Reinigungseinrichtung verbunden ist, die folgende Komponenten enthält:
a) eine Kolbenpumpe (24), die durch eine zweite T-Verbindung (23), einen zweiten Schlauch (22) und ein Ventil (21) mit einem Arm der ersten T-Verbindung (13) verbunden ist,
b) ein Saugrohr (32), das in einer in einem Behälter (33) enthaltenen Reinigungsflüssigkeit eingetaucht ist und das durch ein Rückschlagventil (61) mit einem Arm der zweiten T-Verbindung (23) verbunden ist, und
c) eine Steuereinrichtung (41) zur Steuerung des Ventils (21) und der Kolbenpumpe (24).

6. Pipettiervorrichtung gemäss Anspruch 5, dadurch gekennzeichnet, dass die Steuereinrichtung (41) so eingerichtet ist, dass durch sie das Ventil (21) und die Kolbenpumpe (24) so steuerbar sind, dass zur Durchführung eines Reinigungsvorgangs der Pipettiernadel (11) der folgende Ablauf statt findet:
während eines ersten Intervalls, in dem das Ventil (21) geschlossen gehalten wird und mit der Kolbenpumpe (24) Reinigungsflüssigkeit (34) vom Behälter (33) angesaugt wird, wird das Rückschlagventil (61) durch einen dadurch erzeugten Unterdruck offen gehalten,
während eines darauffolgenden zweiten Intervalls, in dem das Ventil (21) geschlossen gehalten wird und mit der Kolbenpumpe (24) der Druck im zweiten Schlauch (22) erhöht wird, wird das Rückschlagventil (61) durch einen dadurch erzeugten Ueberdruck geschlossen gehalten,
während eines darauffolgenden dritten Intervalls, in dem das Ventil (21) offen gehalten wird und das Rückschlagventil (61) durch Ueberdruck geschlossen bleibt, wird mit der Kolbenpumpe (24) der Druck im zweiten Schlauch (22) annähernd konstant gehalten, wobei ein Teil der im zweiten Schlauch (22) enthaltenen Reinigungsflüssigkeit durch den ersten Schlauch (12) und die Pipettiernadel (11) nach aussen strömt.

7. Pipettiervorrichtung gemäss Anspruch 5, dadurch gekennzeichnet, dass der zweite Schlauch (22) aus einem starren Material besteht.

8. Pipettiervorrichtung gemäss Anspruch 5, dadurch gekennzeichnet, dass der zweite Schlauch (22) aus Polyäthylen besteht.
